Europäisches Patentamt

European Patent Office

Office européen des brevets

(19)

(11) Veröffentlichungsnummer: **0 321 670 B1**

(12) # EUROPÄISCHE PATENTSCHRIFT

(45) Veröffentlichungstag der Patentschrift: **22.07.92**

(51) Int. Cl.⁵: **F25B 41/06,** F25B 49/02

(21) Anmeldenummer: **88117426.2**

(22) Anmeldetag: **19.10.88**

(54) **Vorrichtung zur Ansteuerung des Expansionsventils der Kälteeinrichtung bei einer Kraftfahrzeug-Klimaanlage.**

(30) Priorität: **19.12.87 DE 3743285**

(43) Veröffentlichungstag der Anmeldung:
**28.06.89 Patentblatt 89/26**

(45) Bekanntmachung des Hinweises auf die
Patenterteilung:
**22.07.92 Patentblatt 92/30**

(84) Benannte Vertragsstaaten:
**DE ES FR GB IT SE**

(56) Entgegenhaltungen:
**EP-A- 0 133 512          GB-A- 639 683**
**US-A- 3 478 534          US-A- 3 538 717**
**US-A- 4 617 804          US-A- 4 653 288**
**US-A- 4 689 968**

(73) Patentinhaber: **Behr GmbH & Co.**
**Mauserstrasse 3**
**W-7000 Stuttgart 30(DE)**

(72) Erfinder: **Burk, Roland**
**Schafbergstrasse 10**
**W-7014 Kornwestheim(DE)**
Erfinder: **Ingelmann, Hans-Joachim**
**Unterböblinger Strasse 3**
**W-7071 Iggingen-Schönhardt(DE)**
Erfinder: **Lochmahr, Karl**
**Aschmannstrasse 37**
**W-7143 Vaihingen/Enz(DE)**

(74) Vertreter: **Dreiss, Hosenthien & Fuhlendorf**
**Gerokstrasse 6**
**W-7000 Stuttgart 1(DE)**

## Beschreibung

Die Erfindung bezieht sich auf eine Kälteanlage für ein Kraftfahrzeug, mit einem Kompressor, einem Kondensator, einem ansteuerbaren Expansionsventil und einem Verdampfer, die zur Bildung eines geschlossenen Kreislaufs über Leitungen miteinander verbunden sind, wobei ein erster Temperaturfühler die Temperatur in der Leitung zwischen dem Verdampfer und dem Kompressor, ein zweiter Temperaturfühler die Temperatur in der Leitung zwischen dem Expansionsventil und dem Verdampfer und ein dritter Temperaturfühler die Temperatur vor dem Eintritt in den Verdampfer messen und daraus eine Stellgröße für das Expansionsventil abgeleitet wird. Eine derartige Kälteanlage ist durch die GB-A-639 683 bekannt geworden. Die drei Fühler gehören ein und derselben Regelvorrichtung dieser Kälteanlage an, welche in Abhängigkeit von den Meßergebnissen auf das Expansionsventil einwirkt. Der zweite und dritte Fühler sind der Verbindungsleitung zwischen dem Expansionsventil und dem Verdampfer zugeordnet, weswegen sie genau den gleichen Temperaturwert ermitteln. Der erste Fühler ist zwischen den Kompressor und den Verdampfer geschaltet, weswegen er einen anderen Temperaturwert erfaßt. Sämtliche drei Temperaturfühler sind über Kapillarleitungen mit jeweils einem Thermostat verbunden und alle drei Thermostate gehören zum Regelventil. An letzterem wird ein Sollwert eingestellt. Wenn dieser überschritten wird, führt der Thermostat des zweiten Fühlers einen Schaltvorgang aus. Sobald die Temperaturdifferenz am ersten und dritten Fühler einen bestimmten Wert erreicht hat, erfolgt ein weiterer Schaltvorgang, mit welchem das Expansionsventil geschlossen und dadurch die weitere Kälteerzeugung unterbunden wird.

Bei dieser vorbekannten Kälteanlge, die bspw. für ein Kühlhaus oder dgl. geeignet ist, spielen somit nur der Temperatur-Sollwert im Kühlhaus oder dgl. und die Temperaturdifferenz zwischen dem ersten Fühler und dem zweiten bzw. dritten Fühler eine Rolle. Welchen Aggregatzustand das Kühlmittel vor dem Eintritt in den Kompressor einnimmt, insbesondere, ob dem Kompressor nur Kühlmittel in gasförmigem Zustand zugeführt wird, spielt dort keine Rolle.

Bei Kraftfahrzeugen legt man jedoch Wert darauf, das Expansionsventil so zu regeln, daß stets eine bestimmte, jedoch nicht übermäßige "optimale" Überhitzung des Kältemittels gegeben ist. Dies gewährleistet, daß dem in Strömungsrichtung folgenden Kompressor nur gasförmiges Kältemittel zugeführt wird, um dadurch eine einwandfreie Funktion zu gewährleisten. Andererseits wird aber aus Gründen eines optimalen Kreisprozesses darauf geachtet, daß am Ausgang des Verdampfers möglichst wenig Überhitzung in Kauf genommen werden muß.

Man könnte nun die Messung des Zustands des Kältemittels nach dem Verdampfer bzw. vor dem Kompressor dadurch zuverlässiger gestalten, daß man statt der Temperatur des Kältemittels vor dem Verdampfer den Druck des Kältemittels nach dem Verdampfer mißt und aus Temperatur und Druck die Stellgröße für das Expansionsventil ableitet. Druckmeßgeräte sind jedoch sehr viel teurer als Temperaturmeßgeräte, weswegen man der Temperaturmessung den Vorzug gibt.

Die seither bei Kraftfahrzeug-Kälteanlagen angewandte Bestimmung des Zustands des Kältemittels bzw. seiner Überhitzung aufgrund der Temperaturmessung vor und nach dem Verdampfer hat sich als unzuverlässig herausgestellt. Dies gilt insbesondere, weil sich die Betriebsparameter, vorzugsweise der Kältemitteldruck am Verdampferaustritt, infolge der ständigen Änderungen der Betriebsbedingungen des Kraftfahrzeugs, vor allen Dingen der für die Leistung des Kompressors ausschlaggebenden Motordrehzahl, ständig ändert.

Der Erfindung liegt demgemäß die Aufgabe zugrunde, die Bestimmung der Überhitzung des Kältemittels vor dem Eintritt in den Kompressor als Ausgangsgröße für die Ansteuerung des Expansionsventils einer Kälteeinrichtung in einem Kraftfahrzeug aufgrund von Temperaturmessungen zu verbessern und dadurch sicherzustellen, daß dem Kompressor das Kältemittel nur in gasförmigem Aggregatzustand zugeführt wird.

Erfindungsgemäß erfolgt die Lösung dieser Aufgabe bei einer gattungsgemäßen Kälteanlage dadurch, daß diese gemäß dem kennzeichnenden Teil des Anspruchs 1 ausgebildet ist.

Weil nunmehr die Messungen der Temperaturen T1 und T2 durch den zweiten und dritten Temperaturfühler an zwei Stellen des Kreislaufs erfolgt, an denen das Kältemittel unterschiedliche Zustände bzw. Drücke aufweist, was man erfindungsgemäß durch den Einbau einer einen Druckabfall bewirkenden Vorrichtung in die Leitung zwischen dem Expansionsventil und dem Verdampfer erreicht, kann man der Recheneinheit insgesamt drei unterschiedliche Temperaturwerte übermitteln, die von ihr in ein Steuersignal für das Expansionsventil umgesetzt werden, welches das Expansionsventil in der gewünschten Weise betätigt und dadurch sicherstellt, daß die Überhitzung des in den Kompressor übertretenden Kältemittels einen vorbestimmten Wert erreicht und die Temperaturen T1 und T2 jeweils einem Wert entsprechen, bei dem sich das Kältemittel in allen Betriebszuständen im Naßdampfbereich befindet. Anders ausgedrückt werden durch die beiden Temperaturfühler vor und hinter der den Druckabfall bewirkenden Vorrichtung über die Temperaturmessungen zwei unterschiedliche Zustände des Kältemittels erfaßt. Die Differenz dieser Signale ist eines der Regelkriterien. Ein weiteres resultiert aus der Temperaturmessung des ersten Temperaturfühlers zwischen dem Verdampfer und dem Kompressor. In der Recheneinheit werden diese Signale zu Steuerbefehlen für das Expansionsventil verarbeitet, um den gestellten Anforderungen Rechnung zu tragen. Das Expansionsventil gewährleistet dann seinerseits, daß bspw. am Venturiverteiler der gewünschte Druckabfall stattfinden kann, so daß sich das Kältemittel am zweiten und dritten Fühler in allen Betriebszuständen im Naßdampfbereich befindet. Dadurch ist sichergestellt, daß stets Sättigungstemperaturen gemessen werden. Der Naßdampfbereich ist bekanntlich im Enthalpie-Druck- Diagramm der glockenförmige Bereich, innerhalb dessen das Kältemittel als Zwei-Phasen-System, also sowohl als Dampf als auch als Flüssigkeit anwesend ist.

In weiterer Ausgestaltung der Erfindung ist die den Druckabfall bewirkende Vorrichtung, bspw. ein Venturiverteiler mit mehreren Abflußleitungen, eine Wirbelzelle oder eine Meßblende. Alle diese Vorrichtungen bewirken einen Druckabfall und ermöglichen dadurch das Messen zweier unterschiedlicher Temperaturen vor und hinter der Vorrichtung bzw. das Erfassen zweier unterschiedlicher Zustände des Kältemittels.

Die rechnerische Ermittlung der Überhitzung nach dem Verdampfer oder vor dem Kompressor, auf deren genaue Steuerung durch Einstellung des Expansionsventils es ankommt, erfolgt bei der Messung von Temperaturen an drei Stellen, die den angegebenen Bedingungen genügen, derart, daß die Überhitzung ($\Delta$tü) aus den mittels der drei Tempraturfühler gemessenen Temperaturen ($T_1, T_2, T_3$) in einer Recheneinheit nach der Formel

$$\Delta t\ddot{u} = T_3 - T_2 + k(T_1 - T_2) \qquad (1)$$

berechnet wird, wobei k eine Verdampfer-spezifische Konstante ist, die einmalig experimentiell nach der Beziehung

$$k = \frac{T_2 - T'_3}{T_1 - T_2} \qquad (2)$$

ermittelt werden muß, wobei die Siedetemperatur $T'_3$ durch eine Druckmessung und Umrechnung über die Kältemittel-Dampfdruck-Beziehung zu bestimmen ist. Aufgrund des Wertes für $\Delta$tü und Beziehung (1) wird die Stellgröße dann derart bestimmt, daß die Überhitzung stets den bestimmten vorgegebenen Wert hat. Aufgrund dieser Differenztemperaturbestimmung und -berechnung kann dann in an sich bekannter Weise durch eine Recheneinheit eine Stellgröße für das Expansionsventil abgeleitet werden. Ist z.B. die Überhitzung zu groß, ist der Verdampfer mit Flüssigkeit unterfüllt. Der durch ansich bekannte Stellglieder gesteuerte Öffnungsgrad des Expansionsventils wird in diesem Fall vergrößert, bis sich die gewünschte Überhitzung, errechnet aus den gemessenen Temperaturen, wieder einstellt, usw.

Ein Ausführungsbeispiel der Erfingung und ihrer vorteilhaften Weiterbildungen wird im folgenden anhand der beigefügten Zeichnungen beschrieben. Es stellen dar

Figur 1 den Kältemittelkreislauf einer Kühleinrichtung in einem Kraftfahrzeug mit den zugeordneten Meß- und Steuerungseinrichtungen;

Figur 2 den realen Verlauf des Kreisprozesses im Enthalpie-Druck-Diagramm und

Figur 3 den Verlauf der Temperatur vor und entlang der Stranglänge des Verdampfers.

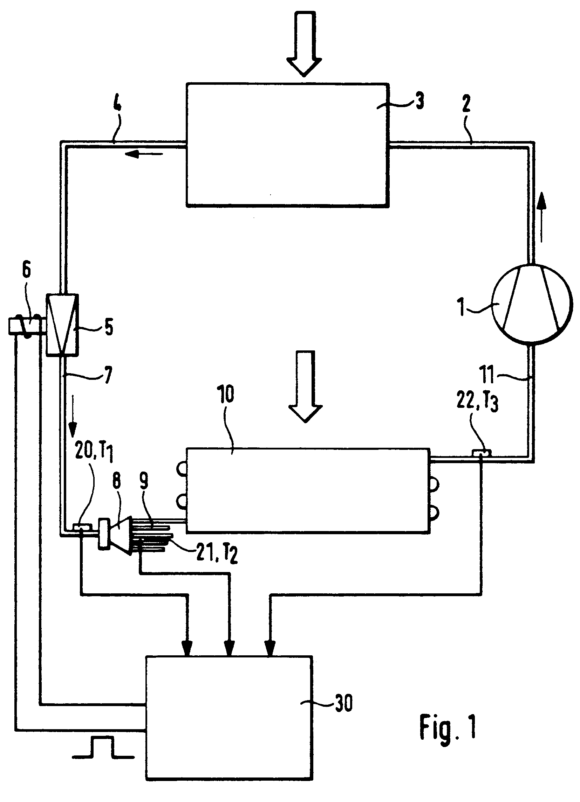

Die Kälteeinrichtung nach Figur 1 besteht aus Kompressor 1, Leitung 2, Kondensator 3, Leitung 4, Expansionsventil 5, das von einer Magnetspule 6 getaktet wird, Leitung 7, Venturiverteiler 8, mehreren Leitungen 9, Verdampfer 10 und Leitung 11. Wie durch die eingezeichneten Pfeile angedeutet, werden sowohl der Kondensator 3 wie auch der Verdampfer 10 von Luft durchströmt. Die den Kondensator 3 durchströmende Luft kühlt diesen. Andererseits wird die durch den Verdampfer hindurchströmende Luft von dem Verdampfer gekühlt. Der Kondensator ist meist dem Fahrtwind ausgesetzt, während der Verdampfer von der zu kühlenden Luft im Innenraum eines Kraftfahrzeugs durchströmt wird.

Entlang des Kältemittelkreislaufs sind drei Temperaturfühler 20, 21, 22 angeordnet, die die Temperaturen $T_1$, $T_2$, $T_3$ messen. Der Temperaturfühler 20 befindet sich in Leitung 7 vor dem Venturiverteiler 8. Der Temperaturfühler 21 befindet sich an einer der Leitungen 9 hinter dem Venturiverteiler 8. Die Leitungen 9 sind sämtlich durch den Verdampfer 10 hindurchgeführt, nachdem in Venturiverteiler 8 der Kältemittelstrom in gleiche Teilströme aufgeteilt worden ist. Der Temperaturfühler 22 befindet sich hinter dem Verdampfer 10, also vor dem Kompressor 1.

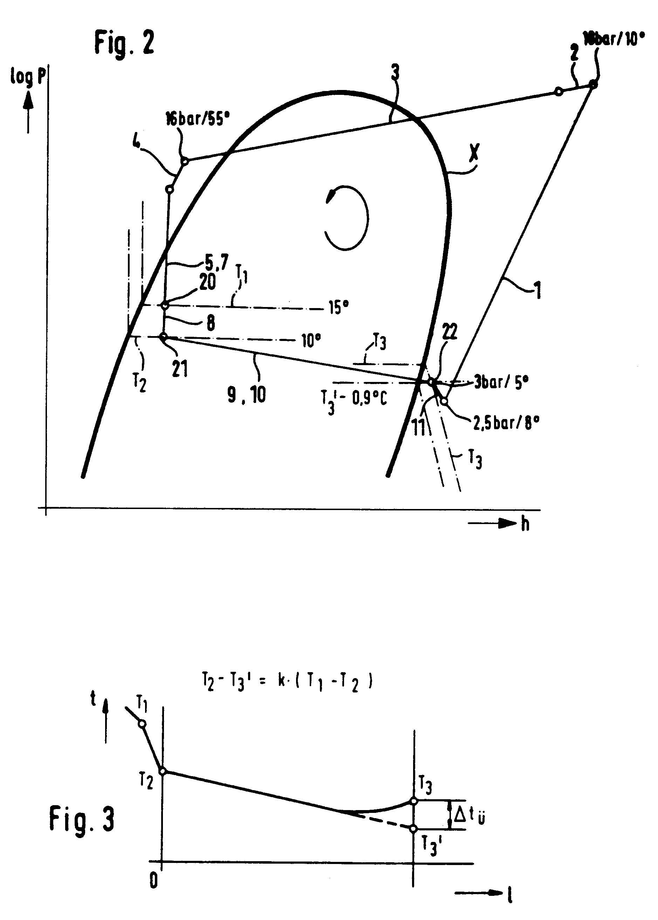

Der Verlauf von Druck und Temperatur an den einzelnen Punkten des Kältemittelkreislaufs ergibt sich aus der Darstellung des Kreisprozesses in Figur 2, wobei an den einzelnen Geraden die Bezugszeichen angebracht sind, die denjenigen Baueinheiten nach Figur 1 entsprechen, in denen sich die durch die Geraden dargestellten Zustandsänderungen vollziehen. Die folgenden Angaben dienen der Erläuterung dieses Kreisprozesses, sind jedoch ausdrücklich lediglich beispielhaft zu verstehen:

Am Ende von Leitung 11 herrscht z.B. ein Druck von 2,5 bar bei 8°C. Im Kompressor wird der Druck auf 18 bar bei 100°C erhöht. In Leitung 2 sowie im Kondensator 3 wird die Temperatur abgesenkt und das Kältemittel in die flüssige Phase übergeführt, wobei sich ein geringfügiger Druckabfall ergibt. Am Anfang von Leitung 4 ist z.B. 16 bar bei 55°C gegeben. Im Expansionsventil 5 und in der sich anschließenden Leitung 7 fällt der Druck sehr stark ab. Gleichzeitig ändert in Folge des abgefallenen Drucks ein Teil des Kältemittels seinen Aggregatzustand von der flüssigen in die gasförmige Phase, wodurch sich das Kältemittel auf die tiefere Temperatur $T_2$, abkühlt, der Rest der flüssigen Phase verdampft im Verdampfer 10, indem der Umgebung Wärme entzogen wird, so daß am Ausgang des Verdampfers bei einem Druck von ca. 3 bar eine Temperatur von 5°C gegeben sein kann.

Die etwas dicker als die übrigen Linien gezeichnete durchgezogene und glockenartige Kurve X umschreibt den Naßdampfbereich, d.h. den Bereich, in dem bei den dadurch definierten Zustandsbedingungen des Kühlmittels dieses sowohl in der Phase Dampf als auch in der Phase Flüssigkeit vorhanden ist.

Von großer Bedeutung für das richtige Funktionieren des Kompressors 1 ist, daß vor seinem Eingang eine gewisse Überhitzung $\Delta$tü gegeben ist. Als Überhitzung bezeichnet man damit die Tatsache, daß die Temperatur höher ist als die Temperatur, bei der das Kühlmittel von der flüssigen Phase in die gasförmige Phase übergeht. Je größer die Überhitzung ist, desto sicherer befindet sich das Kältemittel in gasförmiger Phase. Aus gründen der Betriebssicherheit muß am Eingang des Kompressors 1 eine Temperatur gegeben sein, die mit Sicherheit erwarten läßt, daß sich das gesamte Kältemittel in der gasförmigen Phase befindet, also vollständig verdampft ist. Ist dies z.B. nicht der Fall, d.h. ist die Temperatur niedriger, so bedeutet dies, daß zuviel Kältemittel in den Verdampfer gelangt ist. Das Expansionsventil muß also z.B. durch Takten so angesteuert werden, daß weniger Kältemittel hindurchtritt. Die Temperatur hinter dem Verdampfer bzw. vor dem Eintritt des Kältemittels in den Kompressor wird dann entsprechend höher.

Die Anordnung der Temperaturfühler 20, 21, 22 ist in Figur 2 ebenfalls mit den Bezugszeichen 20, 21, 22 bezeichnet. Durch diese Punkte im Kreisprozeß gehen die gestrichelt eingezeichneten Isothermen $T_1$, $T_2$ und $T_3$. Es ist ersichtlich, daß, wie erwähnt, sich die Temperaturfühler 20, 21 innerhalb der Kurve X, und der Temperaturfühler 22 außerhalb der Kurve X befinden.

Der untere, gestrichelt gezeichnete Verlauf in Figur 3 ist unerwünscht, weil er eine zu niedrige Temperatur $T'_3$ liefert. Der obere der beiden Verlaufe liefert eine Temperatur $T_3$, die um den gewünschten Betrag $\Delta$tü höher liegt.

Es hat sich nun herausgestellt, daß die Temperatur $\Delta$tü aus den durch die Fühler 20, 21, 22 an den angegebenen Stellen gemessenen Temperaturen sehr zuverlässig nach folgender Formel berechnet werden kann

$$\Delta t\ddot{u} = T_3 - T_2 + k(T_1 - T_2).$$

k ist eine Konstante, die vom konstruktiven Aufbau des Verdampfers abhängt. Die Größe k wird in der bereits eingangs dargestellten Weise ermittelt und stellt letztlich das Verhältnis des kältemittelseitigen Druckabfalls im Verdampferrohr zum Vergleichsdruckabfall der Meßblende dar. Im Hinblick auf ausreichende Meßgenauigkeit sollte die Meßstelle für $T_1$ und $T_2$ so angeordnet sein, daß die Konstante k ungefähr 1 mindestens aber in den Grenzen $0,5 \leq k \leq 1,5$ ist. Sie wird für jede der bestimmten Kühleinrichtung experimentell ermittelt und dann der Berechnung von $\Delta$tü zugrundegelegt. Die Berechnung erfolgt in der Recheneinheit 30 (vgl. Figur 1), an die die mittels Temperaturfühler 20 bis 22 gemessenen Temperaturen $T_1$ bis $T_3$ gelangen. In der Recheneinheit 30 wird dann eine Stellgröße $y = f(\Delta t\ddot{u})$ abgeleitet. Ein entsprechendes Steuersignal ist z.B. eine Folge von Rechteckimpulsen bestimmter Länge. Die Länge und der Abstand der Rechteckimpulse bestimmt das zeitliche Verhältnis von Öffnung und Schließung des Expansionsventils 5, so daß derart die Menge des durch das Expansionsventil hindurchtretenden Kühlmittels gesteuert wird.

**Patentansprüche**

1. Kälteanlage für ein Kraftfahrzeug, mit einem Kompressor (1), einem Kondensator (3), einem ansteuerbaren Expansionsventil (5) und einem Verdampfer (10), die zur Bildung eines geschlossenen Kreislaufs über Leitungen (2,4,7,11) miteinander verbunden sind, wobei ein erster Temperaturfühler (22) die Temperatur ($T_3$) in der Leitung (11) zwischen dem Verdampfer (10) und dem Kompressor (1), ein zweiter Temperaturfühler (20) die Temperatur ($T_1$) in der Leitung (7) zwischen dem Expansionsventil (5) und dem Verdampfer (10) und ein dritter Temperaturfühler (21) die Temperatur ($T_2$) vor dem Eintritt in den Verdampfer (10) messen und daraus eine Stellgröße für das Expansionsventil (5) abgeleitet wird, **dadurch gekennzeichnet,** daß sich in der Leitung (7) zwischen dem Expansionsventil (5) und dem Verdampfer (10) eine einen Druckabfall bewirkende Vorrichtung (8) befindet und der zweite Temperaturfühler (20) für die Temperatur (T1) in Strömungsrichtung vor und der dritte Temperaturfühler (21) für die Temperatur (T2) hinter der Vorrichtung jeweils in einem Bereich, bei dem sich das Kältemittel in allen Betriebszuständen im Naßdampfzustand befindet, angeordnet sind, und daß in einer Recheneinheit (30) aus den drei Temperaturwerten (T1, T2, T3) und einer Konstanten, die den kältemittelseitigen Druckabfall im Verdampferrohr im Verhältnis zum Druckabfall an der Vorrichtung (8) berücksichtigt, die Stellgröße derart gebildet wird, daß die Überhitzung (Δtü) des in den Kompressor (1) übertretenden Kältemittels einem vorbestimmten Wert entspricht.

2. Kälteanlage nach Anspruch 1, dadurch gekennzeichnet, daß die den Druckabfall bewirkende Vorrichtung ein Venturiverteiler (8) mit Abflußleitungen (9), eine Wirbelzelle oder eine Meßblende ist.

3. Kälteanlage nach Anspruch 1 oder 2, dadurch gekennzeichnet, daß die Überhitzung (Δtü) aus den mittels der drei Temperaturfühler (20,21,22) gemessenen Temperaturen $(T_1, T_2, T_3)$ in der Recheneinheit (30) nach der Formel

$$\Delta t\ddot{u} = T_3 - T_2 + k(T_1 - T_2)$$

berechnet wird, wobei k die Verdampfer-spezifische Konstante ist.

## Claims

1. Cooling apparatus for a motor vehicle, with a compressor (1), a condenser (3), a controllable expansion valve (5) and an evaporator (10) which are joined together by means of ducts (2, 4, 7, 11) to form a closed circuit, in which arrangement a first temperature gauge (22) measures the temperature (T3) in the duct (11) between the evaporator (10) and the compressor (1), a second temperature gauge (20) measures the temperature (T1) in the duct (7) between the expansion valve (5) and the evaporator (10), and a third temperature gauge (21) measures the temperature (T2) before the entry into the evaporator (10), a correcting variable being derived therefrom for the expansion valve (5), characterized in that a device (8) effecting a pressure drop is situated in the duct (7) between the expansion valve (5) and the evaporator (10), and the second temperature gauge (20) for temperature (T1) is mounted in the direction of flow before the device, and the third temperature gauge (21) for temperature (T2) is mounted behind the device, respectively in a region at which the cooling medium in all operational conditions is in wet steam condition, and in that, in a computer (30), from the three temperature values (T1, T2, T3) and a constant which takes into account the cooling medium pressure drop in the evaporator tube relative to the pressure drop at the device (8), the correcting variable is so formed that the overheating (Δtü) of the cooling medium overflowing into the compressor (1) corresponds to a predetermined value.

2. Cooling apparatus according to claim 1, characterized in that the device effecting the pressure drop is a venturi distributor (8) with outflow ducts (9), a turbulence cell or a restrictor.

3. Cooling apparatus according to claim 1 or 2, characterized in that the overheating (Δtü) is computed in the computer (30) from the temperatures $(T_1, T_2, T_3)$ measured by means of the three temperature gauges (20, 21, 22) according to the formula

$$\Delta t\ddot{u} = T_3 - T_2 + k(T_1 - T_2),$$

wherein k is the evaporator specific constant.

## Revendications

1. Installation de refroidissement pour un véhicule automobile, comprenant un compresseur (1), un condenseur (3), une soupape de détente asservissable (5) et un évaporateur (10), qui sont mutuellement reliés par des conduites (2, 4, 7, 11) pour former un circuit fermé, un premier capteur de température (22) mesurant la température (T3) dans la conduite (11) entre l'évaporateur (10) et le compresseur (1), un deuxième capteur de température (20) mesurant la température (T1) dans la conduite (7) entre la soupape de détente (5) et l'évaporateur (10) et un troisième capteur de température (21) mesurant la température (T2) avant l'entrée dans l'évaporateur (10), et une grandeur de commande pour la soupape de détente (5) étant déduite de ces mesures, **caractérisée** en ce qu'un dispositif (8) produisant une chute de pression se trouve dans la conduite (7) entre la soupape de détente (5) et l'évaporateur (10), et le deuxième capteur de température (20) pour la température (T1) est disposé, dans la direction d'écoulement, avant et le troisième capteur de température (21) pour la température (T2) après le dispositif, chaque fois dans une région dans laquelle le réfrigérant se trouve à l'état de vapeur humide dans tous les états de service, et en ce que, dans une unité de calcul (30) et à partir des trois valeurs de température ($T_1$, $T_2$, $T_3$) et d'une constante qui prend en compte la chute de pression du réfrigérant dans le tube d'évaporateur par rapport à la chute de pression dans le dispositif (8), la grandeur de commande est formée de telle sorte que la surchauffe ($\Delta t\ddot{u}$) du réfrigérant passant dans le compresseur (1) correspond à une valeur prédéterminée.

2. Installation de refroidissement selon la revendication 1, caractérisée en ce que le dispositif produisant la chute de pression est un distributeur venturi (8) à plusieurs conduites de sortie (9), une cellule de tourbillonnement ou un orifice de mesure.

3. Installation de refroidissement selon la revendication 1 ou 2, caractérisée en ce que la surchauffe ($\Delta t\ddot{u}$) est, dans l'unité de calcul (30) et à partir des températures ($T_1$, $T_2$, $T_3$) mesurées au moyen des trois capteurs de température (20, 21, 22), calculée selon la formule

$$\Delta t\ddot{u} = T_3 - T_2 + k(T_1 - T_2),$$

où k est la constante spécifique de l'évaporateur.

Fig. 1

## Fig. 2

## Fig. 3

$$T_2 - T_3' = k \cdot ( T_1 - T_2 )$$